# EUROPEAN PATENT APPLICATION

(11) **EP 1 767 342 A1**
(43) Date of publication of application: **28.03.2007**
(21) Application number: 05743304.7
(22) Date of filing: 27.05.2005
(51) Int. Cl.: B32B 9/00, B32B 15/01, C23C 26/00

(54) **METHOD FOR FORMING FILM ON ZIRCONIUM-BASED METALLIC GLASS SURFACE AND ZIRCONIUM-BASED METALLIC GLASS COMPONENT**

(30) Priority: 28.05.2004 JP 2004160232
(71) Applicant: NGK INSULATORS, LTD., Nagoya-shi, Aichi 467-8530 (JP); TOHOKU UNIVERSITY, Sendai City, Miyagi Prefecture (JP)
(72) Inventor: MURAMATSU, Naokuni, NGK Insulators Ltd, Aichi 467-8530 (JP); SUZUKI, Ken, NGK Insulators Ltd, Aichi 467-8530 (JP); INOUE, Akihisa, Kawauchi-Juutaku 11-806, Miyagi 989-2311 (JP); KIMURA, Hisamichi, 44-3 Arahamafujihirabashi, Miyagi 989-2311 (JP)
(74) Representative: Paget, Hugh Charles Edward
(86) International application number: PCT/JP2005/009802
(87) International publication number: WO 2005/115741

(57) **Abstract**

A method of forming a film on a zirconium-based metallic glass surface, including the steps of forming a film including oxygen, silicon and zirconium, which has a post-drying thickness of 10 µm or less, by drying an alcohol solution containing silicon dioxide in a content of 3 % or more and less than 25 %, after the alcohol solution is applied to a surface of a zirconium-based metallic glass.

## Description

### TECHNICAL FIELD

The present invention relates to a method of forming a film on a zirconium-based metallic glass surface, and to a zirconium-based metallic glass component.

### BACKGROUND ART

Conventionally, there has been known an alloy on which an amorphous layer can be formed at a slow cooling rate of 10OK/s or less. Additionally, it has been known that, by using the alloy, a bulk amorphous alloy (a bulk metallic glass) can be manufactured directly from its molten metal and by any one of production methods such as a water quenching method, an arc melting method, a metal mold casting method, a high-pressure injection molding method, a suction casting method, a mold-clamp casting method and a rotary-disc casting method (for example, The June 2002 edition of Kinou Zairyou (Functional Materials), Vol. 22, No. 6, p.p.26-31).

Metallic glasses manufactured by these production methods, while in large sizes, can acquire mechanical properties which may otherwise lack in crystalline alloys, the mechanical properties being a high strength and a low Young's modulus of elasticity inherent in amorphous materials. For this reason, the metallic glasses are expected to be widely put into practical use as structural materials.

Among them, a zirconium-based metallic glass is promising for being widely put into practical use because the zirconium-based metallic glass can be manufactured by using any one of a large number of production methods, and can be subjected to fine replication forming to which viscous flow is applied (for example, The July 2002 edition of Kinou Zairyou (Functional Materials), Vol. 22, No. 7, p.p.9-18).

However, zirconium (Zr) has poor corrosion resistance to a chlorine-based solution, and therefore, it is concerned that pitting and the like occurs therein in a case where a structural component, which is molded of the zirconium-based metallic glass, is used in a littoral region, or is used as a structural component constantly exposed to an outdoor environment.

For this reason, there have been considered methods in which persons skilled in the art apply painting or coating on a surface of the structural component, thereby adding the corrosion resistance of the structural component to a chlorine-based solution as well as coloring the surface of the structural component.

However, these methods entail a problem that a glossy metallic color inherent in the zirconium-based metallic glass is covered over, and a problem that a delicate and beautiful appearance of decorative patterns on the surface of the molded structural component is deteriorated.

Additionally, although there can be considered a method in which a transparent coating material such as varnish is applied thereto, this method entails a problem that, because varnish tends to turn into a thick film due to high viscosity thereof, a surface of the metallic glass becomes disagreeable to the touch while an beautiful appearance inherent in a base is deteriorated due to interference by reflected light.

Consequently, in order to solve the above described problems, the present inventors carried out keen studies for the purpose of finding a composition and a thickness of a film which is durable for use in such a littoral region and an outdoor environment as described above, and which is also transparent. As a result, they have found that, without deteriorating color shades and decorative patterns on a zirconium-based metallic glass material, the corrosion resistance against a chlorine-based solution can be improved by forming silicon dioxide (SiO₂), which has a high transparency, into a film having a thickness of less than 10 µm.

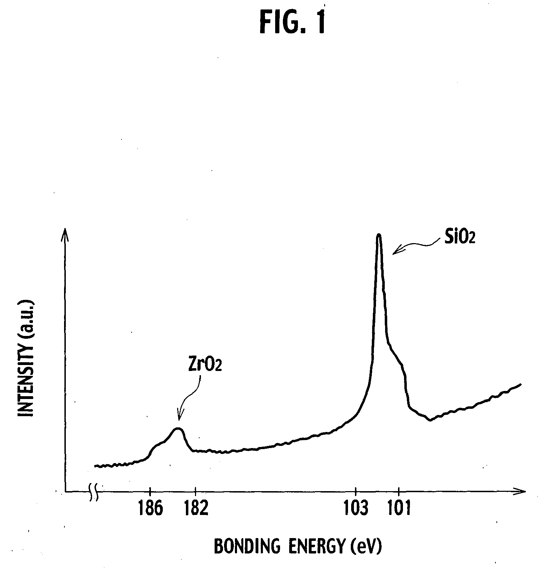

A principle of bonding between a silicon dioxide film (SiO₂ film) and a zirconium-based metallic glass base is currently in the process of being elucidated. When considering the principle based on a surface state analysis through XPS (X-ray photoelectron spectroscopy) shown in Fig. 1, judging from peaks of zirconia (ZrO₂) and silica (SiO₂), it is presumed that the bonding is caused as zirconium (Zr) and silicon (Si) share oxygen of silicon dioxide (SiO₂), then an alcohol solution dispersing silicon dioxide (SiO₂) volatiles with time, and a film is formed thereupon. The present invention is based on these findings as described here.

### DISCLOSURE OF THE INVENTION

An object of the present invention is to provide such a method of forming a film on a zirconium-based metallic glass surface, which is capable of improving corrosion resistance to a chlorine-based solution without deteriorating color shades, touch, and decorative patterns of a zirconium-based metallic glass base, and a zirconium-based metallic glass component.

A first aspect of the present invention is to provide a method of forming a film on a zirconium-based metallic glass surface. The method includes the steps of forming the film including oxygen, silicon and zirconium, which has a post-drying thickness of 10 µm or less, by drying an alcohol solution containing silicon dioxide in a content of 3 % or more and less than 25 %, after the alcohol solution is applied to a surface of a zirconium-based metallic glass.

In the first aspect of the present invention, the alcohol solution may be heat-dried after the alcohol solution is applied.

A second aspect of the present invention is to provide a zirconium-based metallic glass component. The zirconium-based metallic glass component has a film formed on a surface of a zirconium-based metallic glass base, the film has a post-drying thickness of 10 µm or less, and includes oxygen, silicon and zirconium.

### BRIEF DESCRIPTION OF THE DRAWINGS

[Fig. 1] Fig. 1 is a graph showing a result of surface state analysis through XPS (X-ray photoelectron spectroscopy) which is carried out after the film formation by a method of forming a film on a zirconium-based metallic glass surface according to a first embodiment of the present invention.
[Fig. 2] Fig. 2 is a cross-sectional schematic diagram showing a state which appears immediately after an alcohol solution is applied in the method of forming a film on a zirconium-based metallic glass surface according to the first embodiment of the present invention.
[Fig. 3] Fig. 3 is a cross-sectional schematic diagram showing a state which appears after the alcohol solution is applied, and then dried in the method of forming a film on a zirconium-based metallic glass surface according to the first embodiment of the present invention.

### BEST MODES FOR CARRYING OUT THE INVENTION

### [First Embodiment of the Present Invention]

With reference to the drawings, a method of forming a film on a zirconium-based metallic glass surface according to a first embodiment of the present invention will be described.

In the method of forming a film on a zirconium-based metallic glass surface according to this embodiment, an alcohol solution 2 containing silicon dioxide with a content of 3 % or more and less than 25 %is applied to a surface of a zirconium-based metallic glass 1, and then dried, so that a film 3 is formed thereon which has a post-drying thickness of 10 µm or less, and which is composed of oxygen, silicon and zirconium.

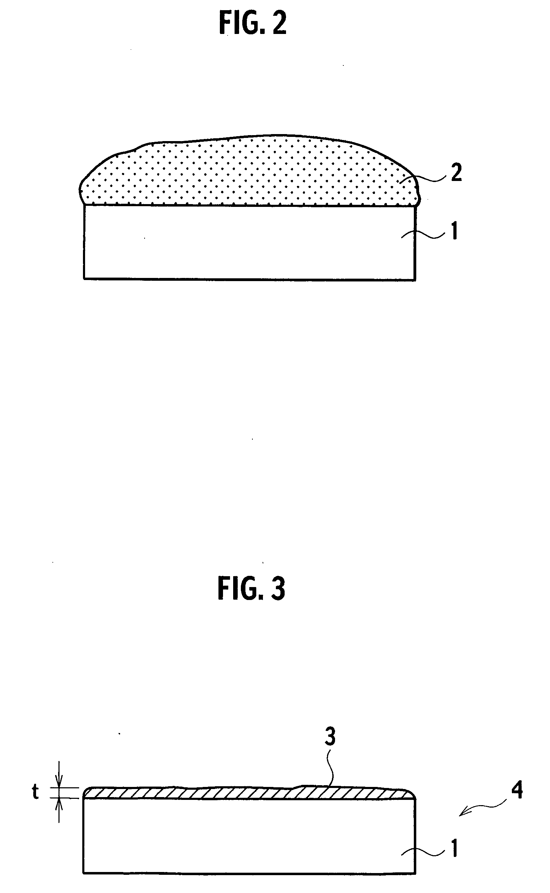

Fig. 2 is a diagram schematically showing a cross-sectional structure which appears immediately after isopropyl alcohol (IPA), which contains silicon dioxide (SiO₂) with a content of about 10 %, is applied to the zirconium-based metallic glass 1 by use of a brush.

Additionally, Fig. 3 is a diagram showing a state where, after isopropyl alcohol (IPA) volatilizes, the film 3 composed of oxygen, silicon and zirconium is formed on the surface of the zirconium-based metallic glass 1.

Here, it is preferable that, in an alcohol solution containing silicon dioxide (SiO₂) (for example, isopropyl alcohol), silicon dioxide (SiO₂) be dispersed in a form of a fine powder on the order of microns to nanometers. However, sizes of the silicon dioxide (SiO₂₎ and a pattern of the dispersion need not be limited to the above conditions.

Additionally, the alcohol solution which facilitates the dispersion of silicon dioxide (SiO₂) need not be limited to isopropyl alcohol (IPA), and the alcohol solution may be any one of methanol, ethanol and the like which have sufficient volatility

A method of applying isopropyl alcohol (IPA) containing silicon dioxide (SiO₂) need not be limited to one using a brush, and any one of spray injection, roller coating, printing, immersion and the like may be used.

On this occasion, isopropyl alcohol (IPA) containing silicon dioxide (SiO₂) may be applied uniformly to the entire surface of the zirconium-based metallic glass 1, or may be applied only to a required location in a required thickness.

Additionally, in the method of forming a film on a zirconium-based metallic glass surface according to this embodiment, a content of silicon dioxide (SiO₂) in the alcohol solution is 3 % or more and less than 25 %.

Note that, if the content of silicon dioxide (SiO₂) in the alcohol solution is less than 3 %, a film with networks of bonding among oxygen, silicon and zirconium is not effectively formed.

Additionally, the bonding is effectively carried out if the content of silicon dioxide (SiO₂) in the alcohol solution is 3 % or more. If the content of silicon dioxide (SiO₂) in the alcohol solution exceeds 25 %, however, a viscosity of the solution becomes high. This makes it difficult to form a thin and uniform film, and increases non-uniformity in film formation. This damages a commercial value in terms of appearance.

Furthermore, in the method of forming a film on a zirconium-based metallic glass surface according to this embodiment, the film 3 is formed on the surface of the zirconium-based metallic glass in a way that the post-drying thickness of the film 3 is less than 10 µm.

Note that, if the post-drying thickness of the film 3 is 10 µm or more, air bubbles are prone to be contained in the applied film at the time of applying the alcohol solution. Air bubbles may remain after isopropyl alcohol (IPA) volatilizes, and may damage appearance.

Additionally, if the post-drying thickness of the film 3 is 10 µm or more, in a case where an external force causing bends and deforms is applied to a component provided with a formed film, minute cracks are prone to be generated in a top surface of the formed film due to a tensile stress. It is likely that the minute cracks may initiate a fracture in the formed film, and that the fracture may lead to partial corrosion in the zirconium-based metallic glass base.

On the other hand, as long as the film 3 after drying is a thin film of less than 10 µm in thickness, a risk of the fracture can be reduced because an external force applied thereto is so small as to allow the film to be flexible.

Additionally, in the method of forming a film on a zirconium-based metallic glass according to this embodiment, the alcohol solution is applied, and then heat-dried.

Here, the drying for causing the alcohol solution to volatilize need not be limited to air-drying with time, and a drying time may be shortened by heat-drying. No particular limit is imposed on a heating temperature in the heat-drying, but the heat-drying is carried out by heating an atmosphere to a temperature not higher than the boiling point of the alcohol solution.

As shown in Fig. 3, in a zirconium-based metallic glass component 4 according to this embodiment, the film 3 which has a thickness (t) of than 10 µm or less, and which is composed of oxygen, silicon and zirconium, is formed on a surface of the zirconium-based metallic glass base 1.

The zirconium-based metallic glass component 4 may be manufactured by use of the method of forming a film on a zirconium-based metallic glass surface according to the above described first embodiment, or may be manufactured by another method.

Table 1 shows a result of evaluating the zirconium-based metallic glass components 4 according to Examples 1 to 5 and Comparative Examples 1 to 3. These zirconium-based metallic glass components 4 were each molded by forming a film on a thin piece of zirconium-based metallic glass in an appropriate size, the thin piece having a surface thereof mirror polished.

With respect to the zirconium-based metallic glass components 4 according to Examples 1 to 5 and Comparative Examples 1 to 3, Table 1 shows: visual evaluation of their film transparencies; corrosion resistance test results based on presence or absence of chlorine corrosion in each of the components after the components were exposed outdoors in a littoral region for one month; and results of a bending test in which, after beforehand bending and deforming the thin pieces having films formed thereon, presence or absence of film fracture was checked by inspecting corrosion resistance of the same kind in each of the same kind.

**[Table 1]**

| | Solution | SiO₂ content (%) | Drying temperature (°C) | Drying time (Minutes) | Film thickness (µm) | Film transparency (Visual evaluation) | Corrosion resistance test results (One-month outdoor exposure) | Bending test results (Presence or absence of film fracture) |
|---|---|---|---|---|---|---|---|---|
| Example 1 | IPA | 3 | Room temperature | 5 | 3 | O | O | O |
| Example 2 | IPA | 7 | Room temperature | 5 | 3 | O | O | O |
| Example 3 | IPA | 15 | 60 | 2 | 4 | O | O | O |
| Example 4 | IPA | 20 | Room temperature | 10 | 9 | O | O | O |
| Example 5 | Ethanol | 24 | Room temperature | 15 | 5 | O | O | O |
| Comparative Example 1 | Water | 15 | Room temperature | 60 | Not more than measurement limit | - | X | - |
| Comparative Example 2 | IPA | 2 | Room temperature | 10 | Not more than 1 | O | X | O |
| Comparative Example 3 | IPA | 30 | 60 | 30 | 12 | X | O | X |

The zirconium-based metallic glass components 4 according to Examples 1 to 5 were those manufactured by the method of forming a film on a zirconium-based metallic glass surface according to the first embodiment.

On the other hand, the zirconium-based metallic glass component 4 according to Comparative Example 1 was manufactured when water was used for a dispersion medium for silicon dioxide (SiO₂) in place of the alcohol solution in the method of forming a film on a zirconium-based metallic glass surface according to the first embodiment.

Additionally, the zirconium-based metallic glass component 4 according to Comparative Example 2 was manufactured when a content of silicon dioxide (SiO₂) in the alcohol solution was 2 % in the method of forming a film on a zirconium-based metallic glass surface according to the first embodiment.

Additionally, the zirconium-based metallic glass component 4 according to Comparative Example 3 was manufactured when a content of silicon dioxide (SiO₂) in the alcohol solution was 30 %, and a film thickness of the film was 12 µm, in the method of forming a film on a zirconium-based metallic glass surface according to the first embodiment.

The zirconium-based metallic glass components 4 according to Comparative Examples 1 to 3 were manufactured in situations which are beyond assumption in the method of forming a film on a zirconium-based metallic glass surface according to the first embodiment.

Note that, in entries for "Film transparency (visual evaluation)" in Table 1, "O" indicates "transparent" whereas "X" indicates "untransparent." Additionally, in entries for "Corrosion resistance test results (one-month outdoor exposure)" in Table 1, "O" indicates "not corroded" whereas "X" indicates "corroded." Furthermore, in entries for "Bending test (presence or absence of film fracture)" in Table 1, "O" indicates "not fractured" whereas "X" indicates "fractured."

Note that, except for the case of the zirconium-based metallic glass component 4 according to Comparative Example 2, it was confirmed, through measurement by XPS (X-ray photoelectron spectroscopy), that the films were those composed of oxygen, silicon and zirconium.

Additionally, as it is clear from Table 1, the zirconium-based metallic glass components 4 according to Examples 1 to 5 have properties of transparency and corrosion-resistance, provided with formed films less risk of film fracture. The zirconium-based metallic glass components 4 have corrosion resistance to a chlorine-based solution and are sufficiently durable for outdoor use in a littoral region, without deteriorating beautiful appearance inherent in the metallic bases.

In contrast, the zirconium-based metallic glass components 4 according to Comparative Examples 1 and 2 cannot obtain corrosion resistance to a chlorine-based solution because the films are formed insufficiently. Additionally, in the case of the zirconium-based metallic glass component 4 according to Comparative Example 3, the formed film is low in transparency, and thereby the beautiful appearance of the metallic glass base is deteriorated. In addition, the zirconium-based metallic glass component 4 has a high risk of film fracture, and also is weak in corrosion resistance.

### INDUSTRIAL APPLICABILITY

As described above, according to the present invention, it is possible to provide a method of forming a film on a zirconium-based metallic glass surface which is capable of improving corrosion resistance to a chlorine-based solution without deteriorating color shades, touch, and decorative patterns of a zirconium-based metallic glass base, and a zirconium-based metallic glass component.

## Claims

1. A method of forming a film on a zirconium-based metallic glass surface, comprising the steps of
forming a film including oxygen, silicon and zirconium, which has a post-drying thickness of 10 µm or less, by drying an alcohol solution containing silicon dioxide in a content of 3 % or more and less than 25 %, after the alcohol solution is applied to a surface of a zirconium-based metallic glass.

2. The method of forming a film on a zirconium-based metallic glass surface according to claim 1, wherein, the alcohol solution is heat-dried after the alcohol solution is applied.

3. A zirconium-based metallic glass component comprises:
a film formed on a surface of a zirconium-based metallic glass base, the film having a post-drying thickness of 10 µm or less, and including oxygen, silicon and zirconium.
